# EUROPEAN PATENT SPECIFICATION

(11) **EP 2 357 399 B1**
(45) Date of publication and mention of the grant of the patent: **19.10.2016**
(21) Application number: 11153814.6
(22) Date of filing: 09.02.2011
(51) Int. Cl.: F21S 8/10, F21V 5/00

(54) **Optical unit**
Optische Einheit
Unité optique

(30) Priority: 16.02.2010 JP 2010031400
(43) Date of publication of application: 17.08.2011
(73) Proprietor: Koito Manufacturing Co., Ltd., Tokyo 108-8711 (JP)
(72) Inventor: Yagi, Takayuki, Shizuoka-shi, Shizuoka (JP)
(74) Representative: Hoffmann Eitle

(56) References cited:
- WO-A1-00/36336
- WO-A2-99/50596
- DE-A1-102007 043 192
- JP-A- 2006 133 635
- US-A1- 2009 225 543

## Description

### [Technical Field]

The present invention relates to an optical unit. More specifically, the present invention relates to an optical unit that has a plurality of light sources.

### [Related Art]

Related art has been proposed that uses a plurality of light sources to form adjacent individual light source images on a rear focal plane of a projection lens, thus forming an integrated light distribution pattern (see Japanese Patent Application Laid-Open (Kokai) No. 2007-179969, for example). By thus using a plurality of light sources to form an integrated light distribution pattern, it is possible to suppress glare affecting a driver of a preceding vehicle by controlling the irradiation of light from each of the plurality of light sources, for example, by reducing an amount of light in only an area where the preceding vehicle is present to less than that of other areas.

However, the amount of light from each of the individual light distribution patterns tends to lower as a boundary portion is approached. Therefore, if the plurality of light sources is thus used to form an integrated light distribution pattern, the boundary portions between the adjacent individual light distribution patterns are susceptible to the occurrence of darkened portions. Meanwhile, if the individual light distribution patterns are overlapped in order to suppress such darkened portions, there is still a risk of glare because despite reducing the amount of light from any one of the individual light distribution patterns, the light of the adjacent individual light distribution pattern remains.

### [Summary of the Invention]

WO 00/36336 relates to a light engine comprising a housing with a light source in the form of a plurality of LEDs, each having a luminous flux of at least 5 lm during operation. JP 2006/133635 A1 discloses features falling under the preamble of claim 1.

According to the present invention, there is provided an optical unit having the features of claim 1.

The present invention was devised in order to solve the problems in the prior art described above. Embodiments of the present invention are able to form an integrated light distribution pattern in a uniform manner with a plurality of light sources.

According to this aspect, light reaching outside the contact edge portion of each of the light source images formed by the plurality of light sources is suppressed, and a reduction in the amount of light closer to the contact edge portion can be avoided. Therefore, a reduction in the amount of light at adjacent boundary portions can be suppressed and an integrated light distribution pattern can be formed in a uniform manner.

Embodiments of the optical unit according to the present invention may further include a partition member that extends so as to separate two adjacent first lenses among the plurality of first lenses.

According to these embodiments, an effect on adjacent light source images can be further decreased. Thus, for example, light can be suppressed from leaking to another adjacent light source image and the effect of glare can be further decreased.

The second lens is formed such that a rear focal plane is a curved plane, and the plurality of light sources are arranged such that the light emitting surface is positioned on a first virtual curved plane that is parallel to the rear focal plane. In addition, the plurality of first lenses are arranged between the rear focal plane and the first virtual curved plane on a second virtual curved plane that is parallel to the rear focal plane.

A rear focal plane of a projection lens is known to curve as a general rule. When, an integrated light source image can be formed in a uniform manner on such a curved rear focal plane, an even more uniform integrated light distribution pattern can be formed.

The plurality of light sources and the plurality of first lenses may be arranged such that pairs thereof forming adjacent individual light source images are staggered in a direction parallel to the contact edge portion.

In such embodiments, the degree of freedom regarding relative positions of adjacent light source images can be increased. Therefore, adjacent light source images can be appropriately arranged so as to form an integrated light distribution pattern in a uniform manner.

According to the present invention, an integrated light distribution pattern can be formed in a uniform manner with a plurality of light sources.

### [Brief Description of the Drawings]

To enable a better understanding of the present invention, and to show how the same may be carried into effect, reference will now be made, by way of example only, to the accompanying drawings, in which:-
FIG. 1 is a top view of an optical unit according to a first embodiment.
FIG. 2 is an enlarged view of around a first lens unit according to the first embodiment not falling under the scope of claim 1.
FIG. 3 is a schematic diagram of an optical path of light passing through a first lens.
FIG. 4 is a schematic diagram of an optical path of light passing through the first lens according to a comparative example;
FIG. 5 is a drawing that shows an illuminance distribution of a light distribution pattern formed using the first lens;
FIG. 6(a) is a drawing that shows a light distribution pattern formed using the first lens, FIG. 6(b) is a drawing that shows an illuminance distribution of the light distribution pattern along a horizontal line, and FIG. 6(c) is a drawing that shows an illuminance distribution of the light distribution pattern along a vertical line;
FIG. 7 is a schematic diagram of an optical path of light passing through the first lens according to the first embodiment not falling under the scope of claim 1;
FIG. 8 is a drawing that shows an illuminance distribution of a light distribution pattern formed using the first lens;
FIG. 9(a) is a drawing that shows a light distribution pattern formed using the first lens, FIG. 9(b) is a drawing that shows an illuminance distribution of the light distribution pattern along a horizontal line, and FIG. 9(c) is a drawing that shows an illuminance distribution of the light distribution pattern along a vertical line;
FIG. 10 is a top view of the optical unit according to a second embodiment;
FIG. 11 is an enlarged view of around the first lens unit according to the second embodiment;
FIG. 12 is a perspective view of the optical unit according to a third embodiment.

### [Detailed Description]

Modes for carrying out the present invention (referred to as embodiments below) will be described in detail below with reference to the drawings.

### (First Embodiment)

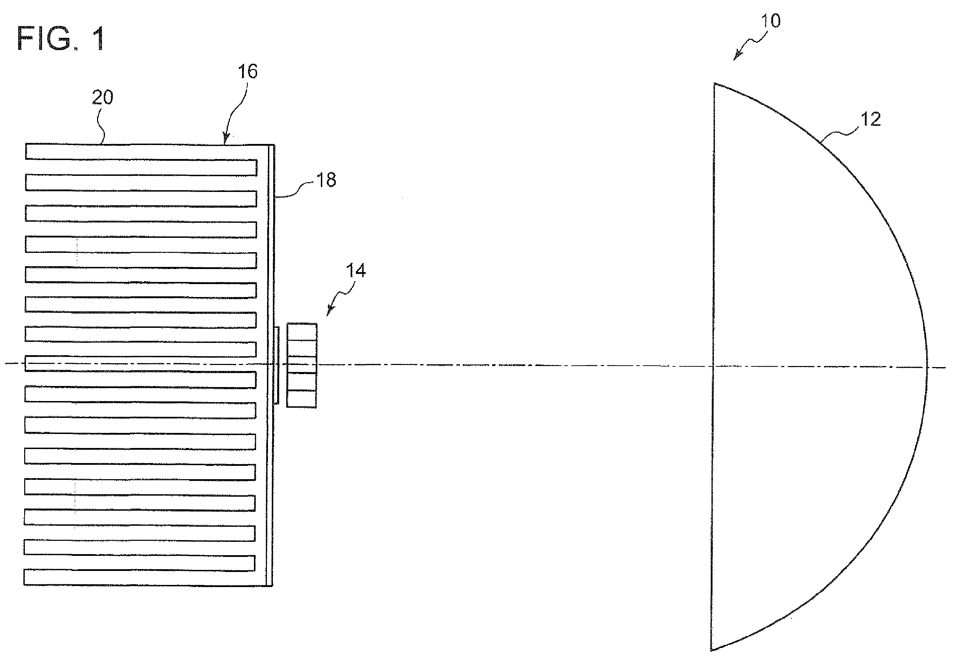

FIG. 1 is a top view of an optical unit 10 according to a first embodiment not falling under the scope of claim 1. The optical unit 10 includes a second lens 12, a first lens unit 14, and a light emitting unit 16. The light emitting unit 16 has a light emitting module substrate 18 and a heat sink 20.

The second lens 12 is a so-called projection lens, and is formed from a planoconvex aspherical lens, wherein a surface on the lamp front side is a convex surface and a surface on the rear side is a plane surface. A projection image of a light source image that is formed on a rear focal plane is projected as an inverted image ahead of the lamp. The heat sink 20 is attached to the light emitting module substrate 18, and dissipates heat generated by a light emitting module mounted to the light emitting module substrate 18.

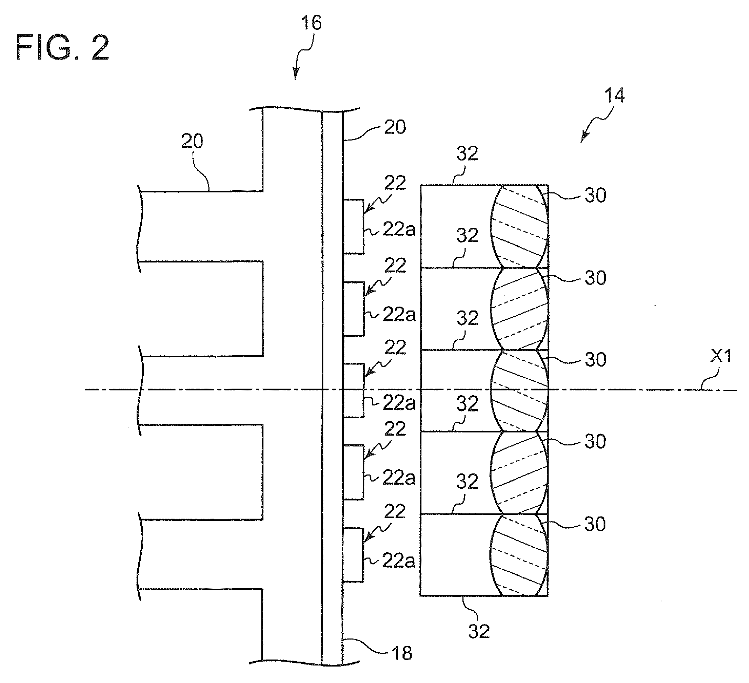

FIG. 2 is an enlarged view of around the first lens unit 14 according to the first embodiment. The light emitting module substrate 18 is configured by mounting a plurality of light emitting modules 22 to a substrate 24. Note that a lens that condenses light is provided on a light emitting surface 22a of the light emitting module 22 such that emitted light advances generally orthogonal to the light emitting surface 22a. However, it is not necessary to provide such a lens.

In the first embodiment, five light emitting modules 22 are provided, but obviously the number of light emitting modules 22 is not limited to five. A light emitting diode (LED) that is a semiconductor light emitting element that functions as a light source is adopted for the light emitting module 22. The light emitting module 22 is provided so as to emit white light. Specifically, the light emitting module 22 is configured by covering a blue LED that emits blue light with a fluorescent substance that converts the blue light into yellow light. The light emitting surface 22a of the light emitting module 22 has an oblong shape. It should be noted, however, that the configuration of the light emitting module 22 is obviously not limited to this.

The plurality of light emitting modules 22 is mounted to the flat substrate 24 and lined up in the horizontal direction. The plurality of light emitting modules 22 in this case is arranged such that the light emitting surfaces 22a are separate from each other. In addition, the plurality of light emitting modules 22 is arranged such that an optical axis X1 of the second lens 12 passes through the center of the center light emitting module 22.

The first lens unit 14 has a plurality of first lenses 30 and a plurality of partition members 32. The plurality of first lenses 30 is provided respectively corresponding to each of the plurality of light emitting modules 22. Accordingly, in the first embodiment, there are five first lenses 30 provided. Each of the plurality of first lenses 30 is provided side by side in the horizontal direction so as to be positioned in front of the light emitting surface 22a of the corresponding light emitting module 22.

Each of the plurality of partition members 32 has a plate shape and functions as a shield plate that shields light so that light is not incident to the adjacent first lens 30. Each of the plurality of partition members 32 extends so as to separate two adjacent first lenses 30. In the first embodiment, the first lenses 30 arranged at the ends are also provided with the partition member 32 on end sides without an adjacent first lens 30. Accordingly, a total of six partition members 32 are provided, four between the first lenses 30 and two on the end sides. Note that the two partition members 32 on the end sides may be omitted.

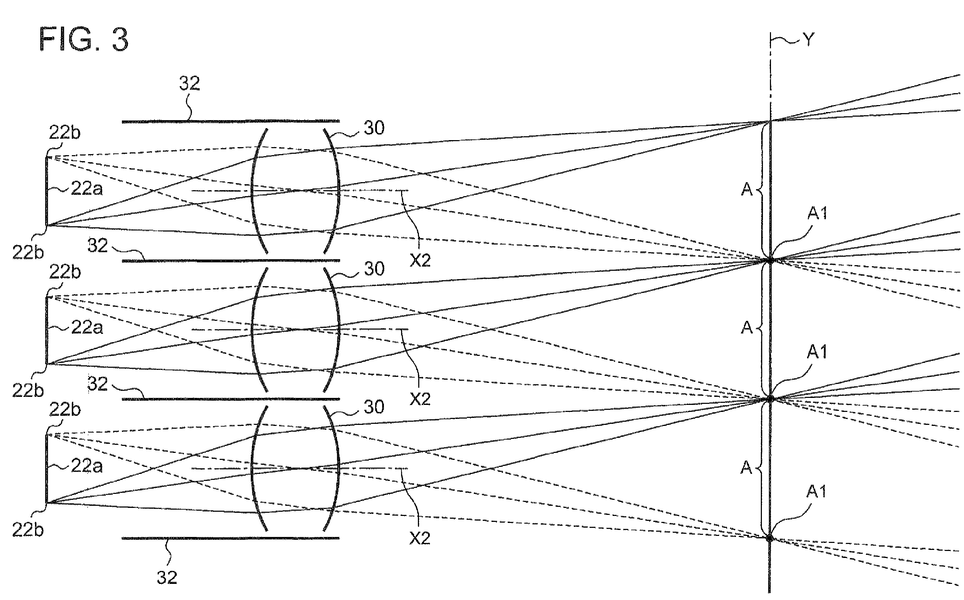

FIG. 3 is a schematic diagram of an optical path of light passing through the first lens 30. A rear focal plane Y of the second lens 12 is actually shaped as a curved plane, but the rear focal plane Y is shown as a flat plane in the drawing for convenience. Each of the plurality of first lenses 30 condenses light radiated from the light emitting surface 22a of the corresponding light emitting module 22 so as to form a plurality of individual light source images A lined up in a row with edge portions thereof contacting each other on the rear focal plane Y. The second lens 12 projects a projection image of the plurality of individual light source images A thus formed forward of the lamp to form an integrated light distribution pattern.

If the plurality of light sources is used in this manner to form a plurality of adjacent individual light source images, there may be darkened portions among boundary portions thereof. If such darkened portions exist, it is difficult to achieve uniform illuminance over the entire light distribution pattern formed.

Hence, in the first embodiment not falling under the scope of claim 1, at a contact edge portion A1 that contacts an adjacent individual light source image A among the edge portions of the individual light source images A formed, each of the plurality of first lenses 30 condenses light radiated from an edge portion 22b that is opposite the contact edge portion A1 with an optical axis X2 of the first lens 30 interposed therebetween among the edge portions 22b of the light emitting surface 22a of the corresponding light emitting module 22. Thus, a darkened portion around the contact edge portion A1 can be suppressed and uniform illuminance over the entire integrated light distribution pattern can be achieved.

### [Comparative Example]

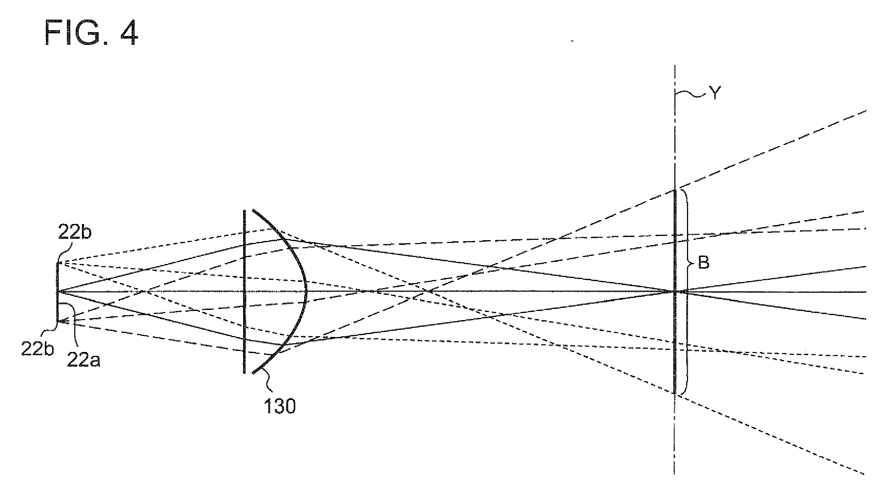

FIG. 4 is a schematic diagram of an optical path of light passing through a first lens 130 according to a comparative example. The configuration of the optical unit is the same as that of the first embodiment not falling under the scope of claim 1, except that the first lens 130 is used in place of the first lens 30.

As shown in FIG. 4, the first lens 130 forms an individual light source image B that is larger than that formed by the first lens 30, and the individual light source image B is formed overlapping with an adjacent individual light source image B. Accordingly, at a contact edge portion that contacts an adjacent individual light source image B among the edge portions of the individual light source images B formed, the first lens 130 does not condense light radiated from the edge portion 22b that is opposite the contact edge portion with an optical axis of the first lens 130 interposed therebetween among the edge portions 22b of the light emitting surface 22a of the corresponding light emitting module 22.

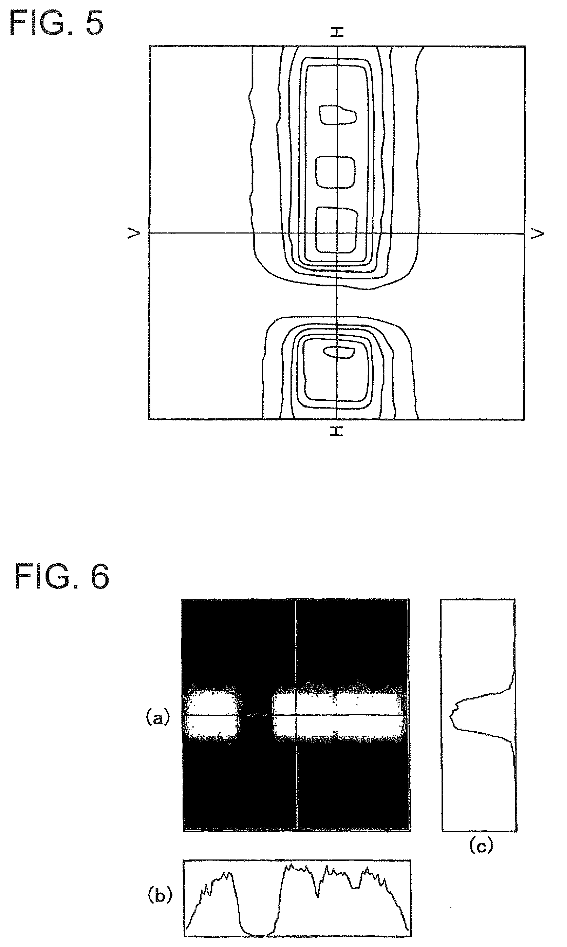

FIG. 5 is a drawing that shows an illuminance distribution of a light distribution pattern formed using the first lens 130. FIG. 6(a) is a drawing that shows a light distribution pattern formed using the first lens 130, FIG. 6(b) is a drawing that shows an illuminance distribution of the light distribution pattern along a horizontal line, and FIG. 6(c) is a drawing that shows an illuminance distribution of the light distribution pattern along a vertical line. Note that FIG. 5 and FIGS. 6(a) to FIG. 6(c) illustrate a time when one among the five light emitting modules 22 is turned off.

As shown in FIG. 5, there is a darkened portion among the boundary portion of the individual light source image. Further, as shown in FIG. 6(b), the boundary portion has reduced illuminance, which produces a valley in the illuminance distribution. As shown here, the uniformity of the light distribution pattern formed with the first lens 130 can still be further improved.

### [First Embodiment]

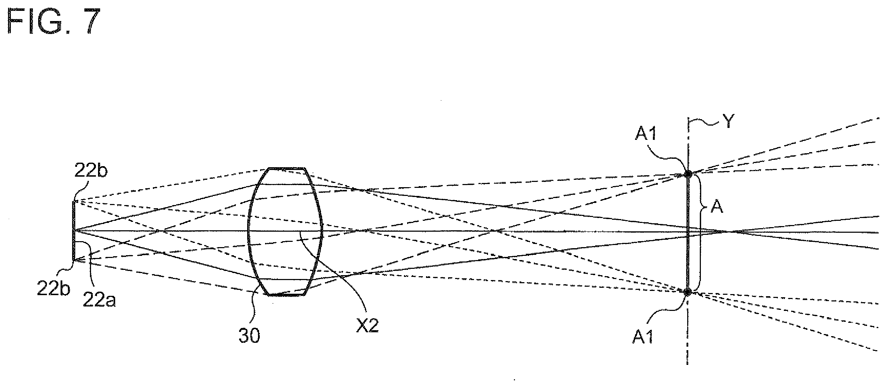

FIG. 7 is a schematic diagram of an optical path of light passing through the first lens 30 according to the first embodiment not falling under the scope of claim 1. As shown in FIG. 7, at the contact edge portion A1 that contacts an adjacent individual light source image A among the edge portions of the individual light source images A formed, the first lens 30 condenses light radiated from the edge portion 22b that is opposite the contact edge portion A1 with the optical axis X2 of the first lens 30 interposed therebetween among the edge portions 22b of the light emitting surface 22a of the corresponding light emitting module 22.

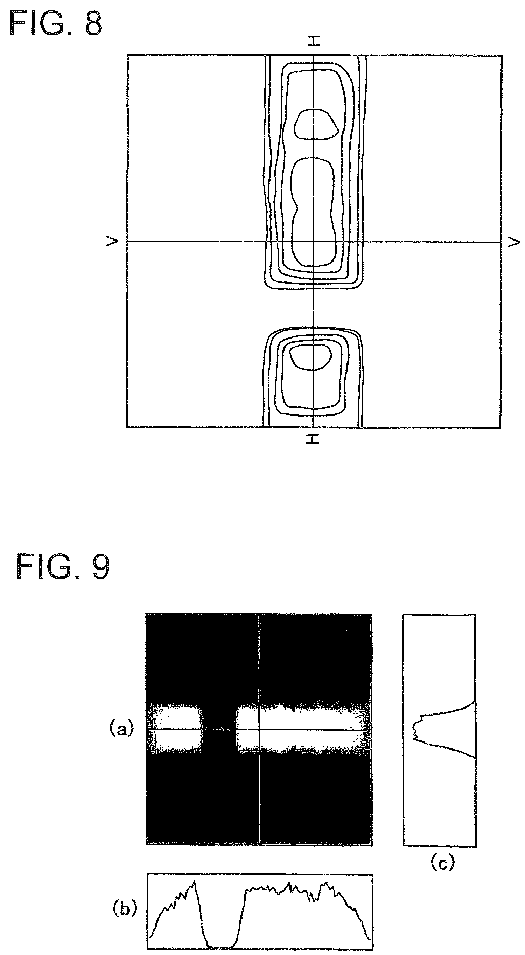

FIG. 8 is a drawing that shows an illuminance distribution of a light distribution pattern formed using the first lens 30. FIG. 9(a) is a drawing that shows a light distribution pattern formed using the first lens 30, FIG. 9(b) is a drawing that shows an illuminance distribution of the light distribution pattern along a horizontal line, and FIG. 9(c) is a drawing that shows an illuminance distribution of the light distribution pattern along a vertical line. Note that FIG. 8 and FIGS. 9(a) to FIG. 9(c) also illustrate a time when one among the five light emitting modules 22 is turned off.

As shown in FIG. 8, there is almost no darkened portion among the boundary portion of the individual light source image. Further, as shown in FIG. 9(b), there is no valley in the illuminance distribution. Thus, by using the first lens 30, the light distribution pattern to be formed can be made uniform.

### (Second Embodiment)

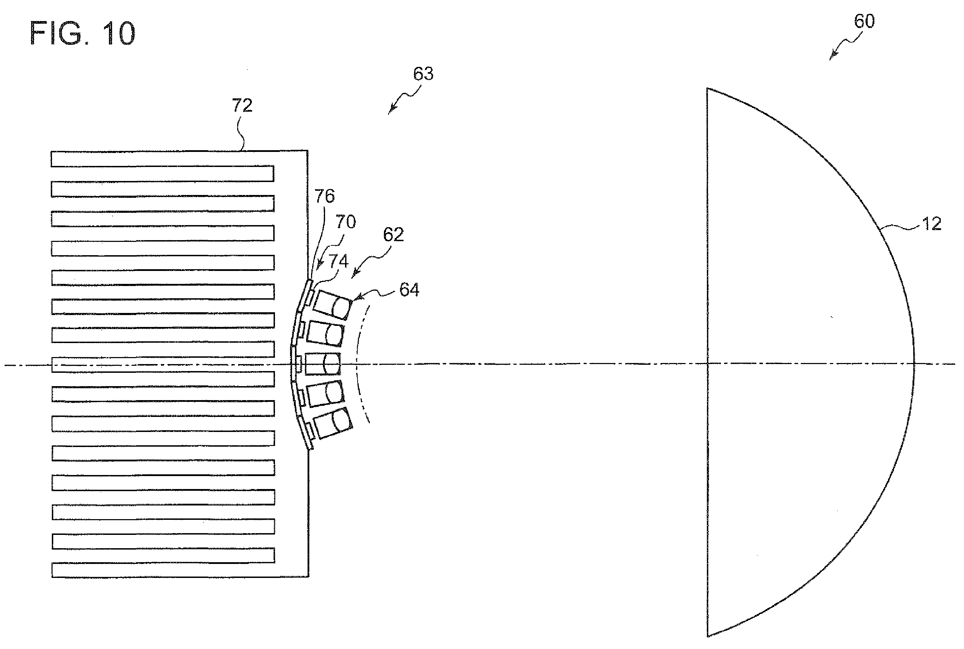

FIG. 10 is a top view of an optical unit 60 according to a second embodiment. Portions identical to those in the first embodiment not falling under the scope of claim 1 are denoted by the same reference numerals and will not be described further here.

The optical unit 60 includes the second lens 12, a first lens unit 62, and a light emitting unit 63. The light emitting unit 63 is configured by a plurality of light emitting module substrates 70 attached to a heat sink 72. Each of the plurality of light emitting module substrates 70 is configured by mounting a light emitting module 74 to a substrate 76. The shape and configuration of the light emitting module 74 is similar to that of the light emitting module 22 according to the first embodiment.

The second lens 12 is formed such that the rear focal plane Y is a curved plane. In the second embodiment, the plurality of light emitting modules 22 is arranged such that the light emitting surface 22a is positioned on a first virtual curved plane Z1 that is parallel to the rear focal plane Y having a curved plane configuration. The first lens unit 62 has a plurality of individual lens units 64. Each of the plurality of individual lens units 64 is respectively arranged in front of each of the plurality of light emitting module substrates 70.

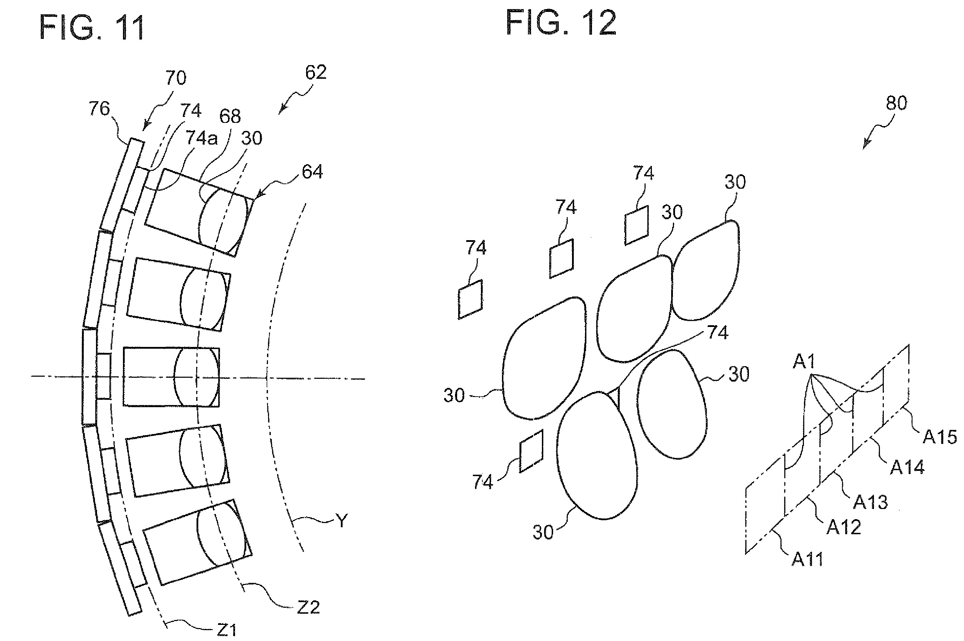

FIG. 11 is an enlarged view of around the first lens unit 62 according to the second embodiment. Each of the individual lens units 64 has a first lens 30 and a partition member 68. The plurality of light emitting modules 74 is arranged such that a light emitting surface 74a is positioned on the first virtual curved plane Z1 that is parallel to the rear focal plane Y.

The plurality of first lenses 30 is provided respectively corresponding to each of the plurality of light emitting modules 74. Accordingly, in the second embodiment as well, there are five first lenses 30 provided. Each of the plurality of first lenses 30 is arranged so as to be positioned in front of the light emitting surface 74a of the corresponding light emitting module 74. The plurality of first lenses 30 in this case is arranged such that the center of the first lens 30 is positioned between the rear focal plane Y and the first virtual curved plane Z1 on a second virtual curved plane Z2 that is parallel to the rear focal plane Y. Thus, individual light source images that correspond to the rear focal plane Y having a curved plane configuration can be formed.

In the second embodiment, the partition member 68 is disposed on both side portions of each of the first lenses 30. The partition member 68 has a plate shape and functions as a shield plate that shields light so that light is not incident to the adjacent first lens 30. Note that each of the plurality of partition members 68 may be arranged extending so as to separate two adjacent first lenses 30 among the first lenses 30.

### (Third Embodiment)

FIG. 12 is a perspective view of an optical unit 80 according to a third embodiment. Portions identical to those in the above embodiments are denoted by the same reference numerals and will not be described further here.

The optical unit 80 according to the third embodiment has the plurality of light emitting modules 74 and the plurality of first lenses 30. In the third embodiment as well, there are five light emitting modules 74 and five first lenses 30 provided. The optical unit 80 according to the third embodiment is configured the same as the optical unit 10 according to the first embodiment, except for an arrangement of the light emitting module 74 and the first lens 30.

Each of the plurality of first lenses 30 condenses light radiated from the light emitting surface 22a of the corresponding light emitting module 22 so as to form a plurality of individual light source images lined up in a row with edge portions thereof contacting each other on the rear focal plane Y. However, in the third embodiment, the plurality of light emitting modules 74 and the plurality of first lenses 30 are arranged such that pairs thereof forming adjacent individual light source images are staggered in a direction parallel to the contact edge portion.

Specifically, the five light emitting modules 74 and the five first lenses 30 form, starting from the left as seen from the front of the lamp, individual light source images A11 to A 15 that are lined up in the horizontal direction, and thus form an integrated light distribution pattern. The five light emitting modules 74 and the five first lenses 30 are arranged vertically staggered per light emitting module 74 and first lens 30. Therefore, the individual light source images A11, A13, and A15 are formed by three light emitting modules 74 and three first lenses 30 arranged in an upper row in the horizontal direction. The individual light source images A12 and A14 are formed by two light emitting modules 74 and two first lenses 30 arranged in a lower row in the horizontal direction.

By thus staggering parallel to the contact edge portion A1 the light emitting modules 74 and the first lenses 30 that form adjacent individual light source images, an interval between individual light source images can be easily set at a design stage. Therefore, the integrated light distribution pattern can be made even more uniform.

The present invention is not limited to the embodiments described above, and is defined by the appended claims.

## Claims

1. An optical unit (10, 60, 80), comprising:
a plurality of light sources (22, 74) that is arranged such that light emitting surfaces are separate from each other;
a plurality of first lenses (30) that is provided respectively corresponding to each of the plurality of light sources (22, 74), each of the plurality of first lenses (30) condensing light radiated from the corresponding light source (22, 74) so as to form a plurality of light source images (A) lined up in a row with edge portions (A1) of the light source images (A) contacting each other on a predetermined virtual plane (Y), and
a second lens (12) that projects a projection image of the plurality of light source images (A1) forward of a lamp; wherein
each of the plurality of first lenses (30), at a contact edge portion (A1) that contacts an adjacent light source image (A) among the edge portions (A1) of the light source images (A) formed, condenses light radiated from an edge portion (22b) that is opposite the contact edge portion (A1) with an optical axis (X1, X2) of the first lens (30) interposed therebetween among edge portions (22b) of the light emitting surface (22a, 74a) of the corresponding light source (22, 74),
**characterized in that**
the second lens (12) is formed such that a rear focal plane (4) is a curved plane,
the plurality of light sources (74) is arranged such that the light emitting surface (74a) is positioned on a first virtual curved plane (Z1) that is parallel to the rear focal plane (Y), and
the plurality of first lenses (30) is arranged between the rear focal plane (Y) and the first virtual curved plane (Z1) on a second virtual curved plane (Z2) that is parallel to the rear focal plane (Y).

2. The optical unit (10) according to claim 1, **characterized by** further comprising:
a partition member (32) that extends so as to separate two adjacent first lenses (30) among the plurality of first lenses (30).

3. The optical unit (80) according to any one of claims 1 to 2, **characterized in that**
the plurality of light sources (74) and the plurality of first lenses (30) are arranged such that pairs thereof forming adjacent light source images (A11, A12, A13, A14, A15) are staggered in a direction parallel to the contact edge portion (A1).

## Patentansprüche

1. Optische Einheit (10, 60, 80), mit:
einer Vielzahl an Lichtquellen (22, 74), die derart angeordnet sind, dass lichtemittierende Oberflächen voneinander getrennt sind;
einer Vielzahl an ersten Linsen (30), die jeweils entsprechend jeder der Vielzahl an Lichtquellen (22, 74) vorgesehen sind, wobei jede der Vielzahl an ersten Linsen (30) von der entsprechenden Lichtquelle (22, 74) gestrahltes Licht bündelt, um eine Vielzahl an Lichtquellenbildern (A) auszubilden, die in einer Reihe mit Randabschnitten (A1) der Lichtquellenbilder (A) einander auf einer vorbestimmten virtuellen Ebene (Y) berührend aufgestellt sind, und
einer zweiten Linse (12), die ein Projektionsbild der Vielzahl an Lichtquellenbildern (A1) nach vorne von einer Lampe projiziert; wobei
jede der Vielzahl an ersten Linsen (30), an einem Kontaktrandabschnitt (A1), der ein angrenzendes Lichtquellenbild (A) von den Randabschnitten (A1) der ausgebildeten Lichtquellenbilder (A) berührt, von einem Randabschnitt (22b) gestrahltes Licht bündelt, welcher dem Kontaktrandabschnitt (A1) gegenüberliegend ist, mit einer optischen Achse (X1, X2) der ersten Linse (30) dazwischen angeordnet, von Randabschnitten (22b) der lichtemittierenden Oberfläche (22a, 74a) der entsprechenden Lichtquelle (22, 74),
**dadurch gekennzeichnet, dass**
die zweite Linse (12) derart ausgebildet ist, dass eine hintere Fokalebene (4) eine gebogene Ebene ist,
die Vielzahl an Lichtquellen (74) derart angeordnet ist, dass die lichtemittierende Oberfläche (74a) auf einer ersten virtuellen gebogenen Ebene (Z1) positioniert ist, die parallel zu der hinteren Fokalebene (Y) ist, und
die Vielzahl an ersten Linsen (30) zwischen der hinteren Fokalebene (Y) und der ersten virtuellen gebogenen Ebene (Z1) auf einer zweiten virtuellen gebogenen Ebene (Z2) angeordnet ist, die parallel zu der hinteren Fokalebene (Y) ist.

2. Optische Einheit (10) nach Anspruch 1, **dadurch gekennzeichnet, dass** sie ferner aufweist:
ein Teilungselement (32), das sich erstreckt, um zwei angrenzende erste Linsen (30) von der Vielzahl an ersten Linsen (30) zu trennen.

3. Optische Einheit (80) nach einem der Ansprüche 1 bis 2, **dadurch gekennzeichnet, dass**
die Vielzahl an Lichtquellen (74) und die Vielzahl an ersten Linsen (30) derart angeordnet sind, dass Paare von ihnen, die angrenzende Lichtquellenbilder (A11, A12, A13, A14, A15) ausbilden, in einer Richtung parallel zu dem Kontaktrandabschnitt (A1) versetzt sind.

## Revendications

1. Unité optique (10, 60, 80), comprenant :
une pluralité de sources de lumière (22, 74) qui est agencée de telle sorte que les surfaces d'émission de lumière sont séparées les unes des autres ;
une pluralité de premières lentilles (30) qui est fournie correspondant respectivement à chacune de la pluralité de sources de lumière (22, 74), chacune de la pluralité de premières lentilles (30) condensant la lumière émise par la source de lumière correspondante (22, 74) de manière à former une pluralité d'images de source de lumière (A) alignées dans une rangée avec des parties de bord (A1) des images de source de lumière (A) étant en contact les unes avec les autres sur un plan virtuel prédéterminé (Y), et
une deuxième lentille (12) qui projette une image de projection de la pluralité d'images de source de lumière (A1) vers l'avant d'une lampe ; dans laquelle chacune de la pluralité de premières lentilles (30), à une partie de bord de contact (A1) qui est en contact avec une image de source de lumière adjacente (A) parmi les parties de bord (A1) des images de source de lumière (A) formées, condense la lumière émise depuis une partie de bord (22b) qui est opposée à la partie de bord de contact (A1), avec un axe optique (X1, X2) de la première lentille (30) interposé entre celles-ci, parmi les parties de bord (22b) de la surface d'émission de lumière (22a, 74a) de la source de lumière correspondante (22, 74),
**caractérisée en ce que**
la deuxième lentille (12) est formée de telle sorte qu'un plan focal arrière (4) est un plan incurvé,
la pluralité de sources de lumière (74) est disposée de telle sorte que la surface d'émission de lumière (74a) est positionnée sur un premier plan virtuel incurvé (Z1) qui est parallèle au plan focal arrière (Y), et
la pluralité de premières lentilles (30) est disposée entre le plan focal arrière (Y) et
le premier plan virtuel incurvé (Z1) sur un deuxième plan virtuel incurvé (Z2) qui est parallèle au plan focal arrière (Y).

2. Unité optique (10) selon la revendication 1, **caractérisée en ce qu'**elle comprend en outre :
un élément de séparation (32) qui se prolonge de manière à séparer deux premières lentilles (30) adjacentes parmi la pluralité de premières lentilles (30).

3. Unité optique (80) selon l'une quelconque des revendications 1 à 2, **caractérisée en ce que** la pluralité de sources de lumière (74) et la pluralité de premières lentilles (30) sont disposées de telle sorte que des paires de celles-ci formant des images de source de lumière adjacentes (A11, A12, A13, A14, A15) sont décalées dans une direction parallèle à la partie de bord de contact (A1).
